# EUROPEAN PATENT APPLICATION

(11) **EP 1 589 453 A1**
(43) Date of publication of application: **26.10.2005**
(21) Application number: 04256097.9
(22) Date of filing: 01.10.2004
(51) Int. Cl.: G06F 17/60

(54) **Label issuing apparatus**

(30) Priority: 23.04.2004 JP 2004127517
(71) Applicant: SEIKO INSTRUMENTS INC., Chiba-shi, Chiba (JP)
(72) Inventor: Tani, Kazuo, Mihama-ku Chiba-shi Chiba (JP); Ogawa, Shuichi, Mihama-ku Chiba-shi Chiba (JP); Sanbongi, Norimitsu, Mihama-ku Chiba-shi Chiba (JP)
(74) Representative: Sturt, Clifford Mark

(57) **Abstract**

To provide a product history management apparatus capable of managing a history of a product from its production to delivery to consumers and a label issuing apparatus. Label IDs are issued for all steps from raw material production to retail product production (retailer and food-service distributor) and a label ID issued this time and a label ID issued in the last step are associated to keep a history of the label IDs, making it possible to grasp a production or distribution history from raw material production to final product production. A label management server issues a label ID and label issuing apparatuses provided for each step print labels. The label management server manages the history of the label IDs and the label issuing apparatuses manage detailed information related to products in each step. In the label and the label issuing apparatuses, an authenticity judgement element (authenticity identification substance) and a detection function are provided to prevent any counterfeit or tampering, which contributes to an improvement in reliability for an information system and allows users to feel secure about the system.

## Description

The present invention relates to a label issuing apparatus, and more particularly to an apparatus for issuing a label for affixing to food products or pharmaceuticals.

Heretofore, consumers have taken great interest in safety or quality of food products that have an intense effect on their health.

The consumers judge the product for safety or quality based on a brand of the product or indication of a label affixed to the product when purchasing food products, and select an appropriate one.

However, it is easy for dealers to determine the indication of the label as they like and to print the label. In recent years, there have been many issues regarding incorrect label indication or deceptive indicationof the foodproducts, the issues being serious in society.

The consumers have no other choice than to rely on the contents of the indication of the label affixed onto the food products and hardly acquire accurate information from the incorrect label indication.

Therefore, reliability for the indicationof the food products has been remarkably lowered. In light of the circumstances, it is necessary to wrestle with a problem of how to give the consumers true information about food products.

Also, food dealers assure the consumers of safety or quality that will ease consumer's anxiety and thus can differentiate their products from those of the other dealers.

As described above, as a system for disclosing information about food products, there is a farm product distribution system based on identifier provision as described below (see JP 10-302105 A). The invention as disclosed in JP 10-302105 A aims at giving a farm product ID number and managing individual information related to the farm product together with the ID number with a computer system that is operated by a neutral organization. The consumer inquiries the ID number assigned to the purchased farm product of the computer system and thus can confirm the individual information related to the farm product.

However, this system can provide the consumer with individual information related to produced food products, for example, vegetables and fruits when the food products are directly delivered to the consumer. However, nowadays, most of food products provided to the consumers are produced through a number of steps, making it difficult to offer the consumer complete information throughout the steps.

Therefore, even when a product is mixed with a deceptive material in any step or stored in bad environments, the consumer is hard to acquire the information about the fact.

Also, when mislabeling is performed such as affixing a deceptive label on the product, or peeling a real, correct label off and affixing a deceptive label, it is difficult to judge the label for authenticity.

The present invention has been made in view of the above-mentioned circumstances, and therefore has an object to provide a label issuing apparatus capable of managing a history of a product from its production to delivery to consumers and judging a label for authenticity.

In order to achieve the above-mentioned object, the present inventionprovides a label issuing apparatus used inaproduct history management system that includes: a plurality of label issuing apparatuses provided for each of steps from raw material production to final product production; and a product history management apparatus for issuing to the plurality of label issuing apparatuses identification information printed on a label affixed on a product produced in each of the steps, including:
identification information transmitting means for obtaining identification information printed on a label affixed in a last step and transmitting the obtained identification information to the product history management apparatus;
identification information receiving means for receiving identification information issued for the step by the product history management apparatus in association with the transmitted identification information;
authenticity judgement means for judging the label affixed in the last step for authenticity by detecting an authenticity identification substance contained in the label; and
label producing means for producing, when the label affixed in the last step is judged authenticated by the authenticity judgement means, a label including the identification information of the step and the authenticity identification substance (first structure).

In the label issuing apparatus according to the first structure of the present invention, the label producing means may produce a label using a label medium containing the authenticity identification substance (second structure).

In the label issuing apparatus according to the first or second structure of the present invention, the label producing means may make the authenticity identification substance contained in a label by dispersing the authenticity identification substance onto a surface of the label (third structure).

In the label issuing apparatus according to any one of the first to third structures of the present invention, the authenticity judgement means may judge, before the label is produced, whether or not a label material contains the authenticity identification substance, and the label producing means may produce, when the label material is judged authenticated, the label (fourth structure).

In the label issuing apparatus according to any one of the first to fourth structures of the present invention, the authenticity judgement means may judge the label produced by the label producing means for authenticity and may have notifying means for notifying a result of the authenticity judgement of the produced label (fifth structure).

The label issuing apparatus according to any one of the first to fifth structures of the present invention may further include:
detailed information inputting means for inputting detailed information related to a product to which a label issued by the label producing means is affixed; and
detailed information storage means for storing the input detailed information in association with the identification information printed on the issued label (sixth structure).

The label issuing apparatus according to any one of the first to sixth structures of the present invention may further include:
identification information inquiry accepting means for accepting an inquiry about identification information;
detailed information searching means for searching the detailed information storage means for detailed information associated with the inquired identification information; and
detailed information transmitting means for transmitting the searched detailed information to an inquirer (seventh structure) . Here, the identification information inquiry accepting means for accepting an inquiry about identification information may include detailed information inquiry accepting means for accepting an inquiry about detailed information upon receiving identification information. In addition, it is possible to transmit to an inquirer the detailed information and the identification information in association with each other.

According to the present invention, it is possible to manage a history of a product from its production to delivery to consumers and judge a label for authenticity.

Embodiments of the invention will now be described by way of further example only and with reference to the accompanying drawings, in which:
FIG. 1 illustrates an outline of how to manage a history of a product with a label management system according to an embodiment of the present invention;
FIG. 2 is a conceptual diagram showing a network configuration of the label management system according to the embodiment of the present invention;
FIGS. 3A and 3B show an example of a hardware configuration of a label issuing apparatus;
FIG. 4 is a conceptual diagram illustrative of an example of a logical configuration of a detailed information database;
FIG. 5 shows an example of a hardware configuration of a label management server;
FIG. 6 is a conceptual diagram showing an example of a logical configuration of a label ID management database;
FIG. 7 is a conceptual diagram showing an example of a logical configuration of a label issuing apparatus database;
FIG. 8 shows an example of a login screen;
FIG. 9 shows an example of a label issuing screen;
FIG. 10 shows an example of a label printed with the label issuing apparatus;
FIG. 11 shows an example of a logical configuration of the detailed information database;
FIG. 12 shows an example of the label issuing screen;
FIG. 13 shows an example of a label printed with the label issuing apparatus;
FIG. 14 shows an example of a logical configuration of the detailed information database;
FIG. 15 shows an example of a label printed with the label issuing apparatus;
FIG. 16 shows an example of a search screen;
FIG. 17 shows an example of a search result screen;
FIG. 18 shows an example of a detailed information screen (outline);
FIG. 19 shows an example of a detailed information screen (detail);
FIG. 20 is a flowchart illustrative of a procedure of printing a label ID;
FIG. 21 is a flowchart illustrative of a procedure of printing a label ID;
FIG. 22 is a flowchart illustrative of a procedure of searching a food production history; and
FIG. 23 is a flowchart illustrative of a procedure of producing a label in Modified Example 7.

Hereinafter, a preferred embodiment of the present invention will be described in detail with reference to the accompanying drawings.

### (1) Summary of Embodiment

A label management system according to an embodiment of the present invention is structured such that a label ID is issued for all steps from raw material production to retail product production (retailer and food-service distributor) and a label ID issued this time and a label ID issued in the last step are associated to keep a history of the label IDs, making it possible to grasp a production or distributionhistory fromrawmaterial production to final product production.

A label management server 2 issues a label ID and label issuing apparatuses 5 provided for each step print a label.

More specifically, operators in each step read a label ID from a label affixed on a product delivered from a previous step and input detailed information in present step to transmit the information to the label management server. The label management server checks contents of the transmitted detailed information, and then issues and transmits a label ID for the step concerned in association with the received label ID to the operators. The operators affix a label with the label ID received from the label management server, on the product completed through the step concerned.

In this way, the label IDs are issued in association with one another in the step order, making it possible to trace the history of the product. Also, detailed information related to processing or distribution of a product (for example, weight, quarantine test result, address or name of producer etc., or the like for beef) is stored in association with the label ID in a database, by which the history of the product can be managed more precisely.

Also, when making a request to issue a label ID for a completed product, the operators should request it in association with the label ID issued in the previous step and thus cannot issue a label as they like. In this way, erroneously issued labels or deceptive labels are prevented from being distributed.

Further, a label issuing server manages the history of the label ID and the label issuing apparatus controls detailed information related to the product in each step. The detailed information related to the product can be stored in a distributed manner in the label issuing apparatuses 5. Therefore, a load on the label management server can be reduced.

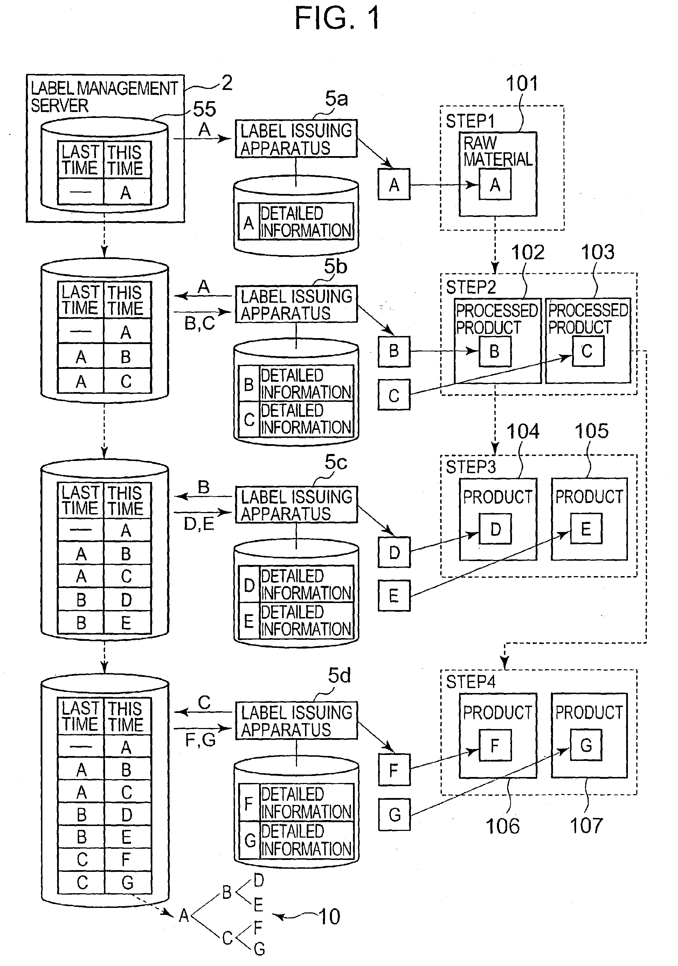

FIG. 1 shows the label management system according to this embodiment and illustrates an outline of how to manage a history of a product using a label added with ID information.

Assume that a raw material produced in step S1 is processed in step S2, further processed into a product in steps S3 and S4, and delivered to the consumer. The target product may be a food product, for example, meat such as beef or seafood, or farm product.

The label issuing apparatus is provided in each step, which is networked with the label management server. In each step the label is affixed on the product, which is printed with the label ID issued from the label management server. The label management server 2 is provided with a label ID management database 55 for storing and managing the issued label ID. The label ID management database 55 stores a label ID issued in the previous step and a label ID issued this time in association with each other as described later. In FIG. 1, the label ID issued in the previous step is represented by "last time" and the label ID issued this time is represented by "this time" and both the label IDs are associated.

As described hereinbelow, the label management server stores the label ID transmitted from the label issuing apparatus in a region of "last time" of the label ID management database 55 and stores the label ID transmitted to the label issuing apparatus in a region of "this time".

The label management server issues the label ID to the product in each step in the following procedure.

First, the server issues a label ID (A) (hereinafter, referred to as "label ID-A") for step S1 from which a series of processings is started, and transmits it to a label issuing apparatus 5a. The label ID-A is stored in the label ID management database 55.

The label issuing apparatus 5a receives the label ID-A from the label management server and prints the label ID-A on a label. The printed label is affixed on a raw material 101.

At this time, detailed information related to the raw material (for example, slaughter date or BSE test result) can be input to the label issuing apparatus 5a. The label issuing apparatus 5a can store the label ID in association with the detailed information.

Next, it is assumed that the raw material 101 is shipped to the next place (step S2) and a processed product 102 and a processed product 103 are produced from this material.

In step S2, first, the label ID-A printed on the label is input to a label issuing apparatus 5b to transmit the label ID-A to the label management server.

The label management server receives and stores the label ID-A in the label ID management database 55 to issue a label ID-B and a label ID-C to the processed products 102 and 103, respectively. The server transmits the issued label IDs to the label issuing apparatus 5b and stores the label ID-B and the label ID-C in association with the previously received label ID-A in the label ID management database 55.

The label issuing apparatus 5b prints the label ID-B and the label ID-C transmitted form the label management server on labels. The printed labels are respectively affixed to the processed products 102 and 103, and the products are transferred to the next step.

Also, the label issuing apparatus 5b stores detailed information related to the processed products 102 and 103 in association with the label ID-B and the label ID-C, respectively.

Next, consider the case where the processed product 102 is transferred to step S3, and products 104 and 105 are produced.

In step S3, the label ID-B printed on the label on the processed product 102 is input to the label issuing apparatus 5c and transmitted to the label management server.

The label management server stores the label ID-B in the label ID management database 55 as well as issues a label ID-D and a label ID-E to the products 104 and 105 produced in this step. The label management server then transmits the label ID-D and the label ID-E to the label issuing apparatus 5c as well as stores those IDs in association with the label ID-B in the label ID management database 55.

The label issuing apparatus 5c prints the label ID-D and the label ID-E transmitted from the label management server on labels. The printed labels are respectively affixed on the products 104 and 105 that are retailed to the consumers.

The label issuing apparatus 5c also stores detailed information input in relation to the products 104 and 105, in association with the label ID-D and the label ID-E, respectively.

Meanwhile, it is assumed that the processed product 103 produced in step S2 is transferred to step S4 and products 106 and 107 are produced using the processed product 103.

Similar to step S3, the label management server stores a label ID-F and a label ID-G in association with the label ID-C of the label on the processed product 103, and a label issuing apparatus 5d prints the label ID-F and the label ID-G on labels.

The products 106 and 107 affixed with those labels are then retailed to the consumers.

Through the above procedure, a history of the products in every step from the raw material 101 to the products 104 to 107 is recorded in the label ID management database 55 as shown in a genealogical tree 10.

Also, detailed information in each step is stored in the label issuing apparatuses 5a to 5d in association with the label IDs.

The history of the label IDs and detailed information associated with each label ID are posted on the Internet, and the consumers can trace the history of a purchased product from a raw material to a final product in each step by using the label ID printed on the label affixed on the product.

For example, the consumer who purchased the product 107 searches the label ID management database 55 for the label ID, and acquires information that the product is produced through the steps of A, C, and G in this order. Further, the consumer makes an inquiry about the label ID-C with the label issuing apparatus 5b and can obtain detailed information related to the processed product 103.

Note that in the above example, for example, the label IDs are individually issued to the products 104 and 105 in step S3. However, the products produced under the same conditions and in the same step can be uniformly given the same label ID.

### (2) Detailed Description of Embodiment

In this embodiment, a description is given using as an example a meat processing/distributingsystemfor producing and distributing a beef product. Note that this system is similarly applicable to any system for distributing pharmaceuticals or other products.

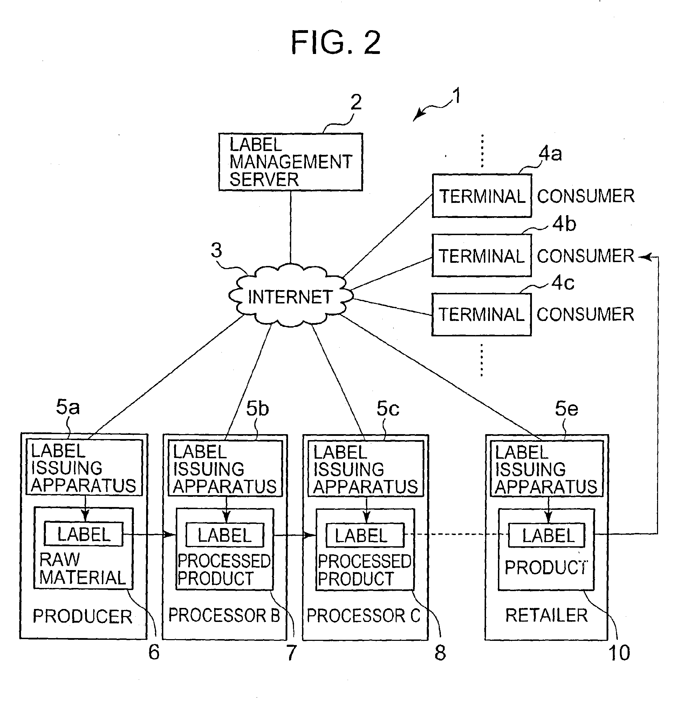

FIG. 2 is a conceptual diagram showing a network configuration of a label management system 1 of this embodiment.

The label management system 1 is provided with the label management server 2, terminals 4a, 4b, 4c,..., and the label issuing apparatuses 5a, 5b, 5c, 5d, and 5e, which are connectable with one another via an Internet 3.

The label management server 2 manages the label ID printed on wrappings etc. for a labeling object such as a raw material, processed product, or retail product and runs a Web site where the history of the label on the processed product and the retail product and the detailed information stored in the label issuing apparatuses 5a to 5e are posted on the Internet 3.

The label management server 2 issues, to the label issuing apparatus 5 (label issuing apparatus 5a in FIG. 2) placed in the slaughterhouse etc. at the step from which the production of a beef product starts, the first label ID of these series of label IDs whose history is recorded and transmits, to the label issuing apparatuses 5 (label issuing apparatuses 5b to 5e in FIG. 2) provided for the subsequent steps (e.g., process or retail) , a label ID for the present step after receiving the label ID issued in the previous step.

Here, the label ID constitutes identification information printed on the label. The label management server 2 constitutes a product history management apparatus for managing the history of the label ID.

The label management server 2 includes identification information receiving means for receiving the label IDs from the label issuing apparatuses 5a to 5e and identification information transmitting means for transmitting the label IDs to the label issuing apparatuses.

The label issuing apparatuses 5a to 5e (hereinafter simply referred to as "label issuing apparatuses 5" unless otherwise specified) are printing apparatuses for printing the label IDs issued from the label management server 2 onto the labels and are provided for every step from production of beef at the slaughterhouse (label issuing apparatus 5a) to its process (label issuing apparatuses 5b to 5d) and retail (label issuing apparatus 5e).

As regards the label issuing apparatus 5a, the apparatus requests the label management server 2 to issue the label ID and receives the label ID issued by the label management server 2 in response to the request to thereby print the ID on the label.

The label issuing apparatuses 5b to 5e provided for the subsequent steps transmit the label ID affixed to the delivered beef product (label ID in the previous step) to the label management server 2 and receives the label ID for the present step from the label management server 2 to thereby print the ID on the label.

In this way, the label issuing apparatuses 5 are provided with the identification information transmitting means for transmitting the label ID issued in the previous step, the identification information receiving means for receiving the label ID transmitted from the label management server with respect to the transmitted label ID, and printing means for printing the received label ID.

Note that data exchanged between the label management server 2 and the label issuing apparatuses 5 is wholly encrypted.

Also, the label issuing apparatuses 5 each function as a printer having a communication function as well as function as a database device for inputting the detailed information related to the labeling object and managing the detailed information in association with the label ID.

As discussed above, the label issuing apparatuses 5 include detailed information inputting means and detailed information storage means.

In addition, the label issuing apparatuses 5 each function as a Web server for putting the detailed information on the Internet 3.

The terminals 4 are terminal devices for accessing the label management server 2 or the label issuing apparatuses 5, for example, a personal computer connectable to the Internet 3.

The terminal 4 is mainly used to trace the history of a beef product that the consumer purchases by using a label ID printed on a package for the beef product. Also, the processor or retailer of the beef product uses the terminal 4 in tracing the history of delivered beef product.

The terminal 4 allows an access to the label management server 2 to trace the history of the label ID.

Also, the terminal 4 can receive, as described below, detailed information in each step from each label issuing apparatus 5 via the label management server 2 or directly.

In actual systems, there are plural processing/distributing processes for the beef product, and a structure thereof is complicated. FIG. 2 illustrates a case where a product 10 is obtained by slaughtering cattle to produce a raw material 6 and processing the raw material into processed products 7 and 8, as an example.

Also, the label issuing apparatuses 5 are constantly connected to the Internet 3 and provide detailed information whenever the label management server 2 or the terminal 4 makes a request.

Note that in this embodiment, the Internet 3 is adopted as a network for operating the label management system 1. However, the present invention is not limited thereto. Instead, a system may be architected, for example, by a local area network (LAN), a wide area network (WAN), or other such networks.

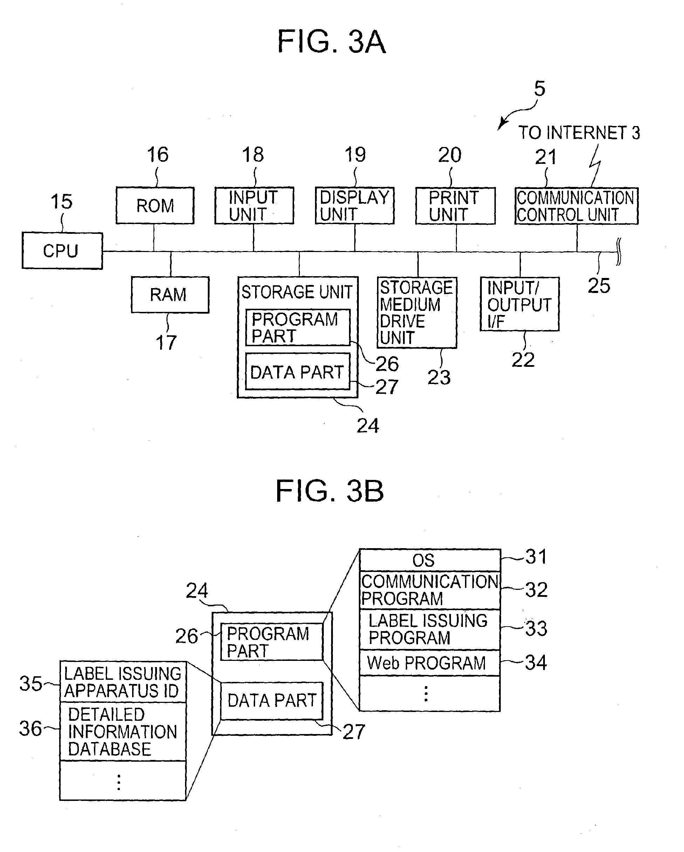

FIG. 3A shows an example of a hardware configuration of the label issuing apparatuses 5.

The label issuing apparatuses 5 are each configured by a central processing unit (CPU) 15, a read only memory (ROM) 16, a random access memory (RAM) 17, an input unit 18, a display unit 19, a print unit 20, a communication control unit 21, an input/output interface (I/F) 22, a storage medium drive unit 23, and a storage unit 24. The respective functional parts are connected via a bus line 25.

The CPU 15 is a central processing unit for performing various arithmetic processings or information processing, or controlling respective components of the label issuing apparatuses 5 based on a predetermined program. In this embodiment, for example, the CPU serves to communicate with the label management server 2 to exchange the label ID therewith, print the label, or input or manage the detailed information. The ROM 16 is a read only memory that stores a basic program or data for operating the label issuing apparatuses 5.

The RAM 17 is a random access memory (read write memory (RWM)) that provides a working area for operating the CPU 15.

The CPU 15 is a functional part for inputting information to the label issuing apparatuses 5 and has a keyboard or mouse, for instance.

The keyboard includes character keys for inputting numerals and characters, a numeric keypad, and function keys for designating preset functions, and is used to input the label ID printed on the label in the previous step or input the detailed information. The mouse is a pointing device for designating or selecting the element displayed on the display unit 19.

Upon reading a label ID printed on the label in the previous step using any device, the input unit 18 is provided with a device for reading the label ID.

For example, in the case where the label ID is printed in the numeric or barcode form, the device serves as a reading device for optically reading the numeric or bar-coded data. If the label ID is stored in a magnetic storage medium, the device serves as a magnetic reading device. In the case of using a non-contact IC chip, the device serves as a reader for reading the data stored in the non-contact IC chip.

In this embodiment, the label ID is printed in the numeric form and the operator inputs the ID with the keyboard.

The display unit 19 has a display device for displaying text or image information and displays information necessary for printing the label or managing the detailed information.

The display device includes a cathode-ray tube (CRT) display, a liquid crystal display, or a plasma display.

The print unit 20 is a functional part for printing the label and includes various types of printing apparatuses such as a laser printer, an inkjet printer, and a direct thermal printer.

A printer for special printing may be used as the printing apparatus, which hardly allows any counterfeit. A printer for printing holograph on the label is given as an example thereof.

The communication control unit 21 is a functional part for connecting the label issuing apparatuses 5 to the Internet 3. The label issuing apparatuses 5 can communicate with the label management server 2 or communicate with each other through the communication control unit 21.

The input/output I/F 22 is an interface for extending the function of the label issuing apparatuses 5 by connecting the label issuing apparatuses 5 to an external device. Examples of the connectable external device include: a storage device such as a hard disk or semiconductor memory device; an output device such as a speaker; and an input device such as a scanner.

The storage medium drive unit 23 is a functional part for driving a removably inserted storage medium to read and write data.

The random access memory (storage medium) is, for example, a flexible disk, a magneto-optical disk, a semiconductor memory device, a magnetic tape, or a paper tape.

Also, the read only memory (storage medium) is, for example, an optical disk such as a CD-ROM.

The label issuing apparatuses 5 can install a program from the storage medium inserted to the storage medium drive unit 23 and also backup the label ID or detailed information to the storage medium.

The storage unit 24 is, for example, a random access memory (storage device) with a large capacity, which is configured by a hard disk or the like.

A program part 26 storing programs and a data part 27 storing data are provided in the storage unit 24.

As shown in FIG. 3B, the program part 26 stores various programs such as an operating system (OS) 31, a communication program 32, a label issuing program 33, and a Web program 34, which can be run by the CPU 15.

The OS 31 is a program for causing the CPU 15 to exert the basic function of operating the label issuing apparatuses 5 such as managing the input/output of files or controlling various functional parts.

The communication program 32 is a program for causing the CPU 15 to exert a function of controlling the communication control unit 21 and maintaining connection between the Internet 3 and the label issuing apparatuses 5.

The label issuing program 33 is a program for causing the CPU 15 to exert the function of printing the label or managing the detailed information.

Examples of functions related to label printing include a function of a browser for allowing the display unit 19 to display a screen using screen data transmitted from the label management server 2 or screen data stored in the storage unit 24, and a function of transmitting the label ID in the previous step to the label management server 2 and receiving the label ID for the present step from the label management serer 2 to print the ID on the label.

Also, examples of the function of managing the detailed information include a function of allowing a user (operator in charge who operates the label issuing apparatus 5 in the step) to input the detailed information and storing the input detailed information in association with the label ID issued this time in the data part 27.

The Web program 34 causes the CPU 15 to exert a function of accepting an inquiry about the detailed information from the label management server 2 or the terminal 4 via the Internet 3 and searching the corresponding detailed information, in response to an inquiry request, to provide the obtained information.

In this case, the Web program 34 causes the label issuing apparatuses 5 to exert a function of a server for providing the detailed information.

The data part 27 stores various kinds of data and various databases necessary for operating the label issuing apparatuses 5, such as a label issuing apparatus ID 35, or a detailed information database 36.

The label issuing apparatus ID 35 is ID information for identifying one of the label issuing apparatuses 5 from the rest and the label issuing apparatuses 5 transmit the label issuing apparatus ID 35 to the label management server 2, so that the label management server 2 can identify the label issuing apparatus 5.

The detailed information database 36 is a database storing detailed information (explained later) related to the product produced in the step in association with the corresponding label ID.

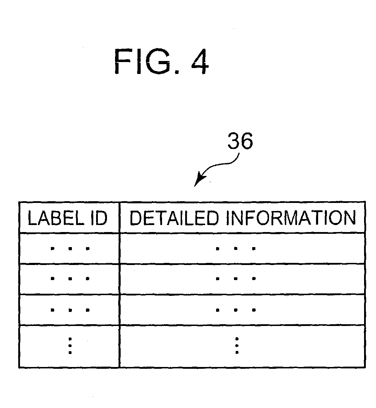

FIG. 4 is a conceptual diagram illustrative of an example of a logical configuration of the detailed information database 36.

As shown in FIG. 4, the detailed information database 36 stores the label IDs and the detailed information in a one-to-one correspondence, making it possible to search the detailed information with the label ID used as a key to search.

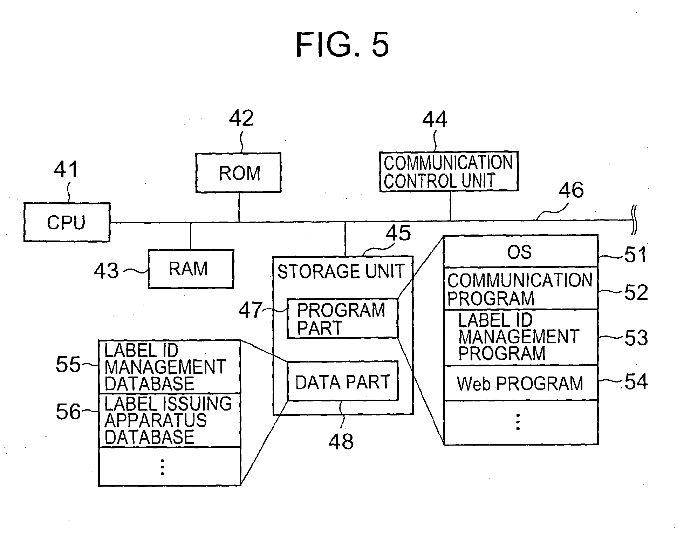

FIG. 5 shows an example of a hardware configuration of the label management server 2.

The label management server 2 includes a CPU 41, a ROM 42, a RAM 43, a communication control unit 44, and a storage unit 45. The respective functional parts are connected via a bus line 46. The CPU 41 is a central processing unit operating according to a predetermined program and causing the label management server 2 to exert a function of the server for issuing a label.

The ROM 42 is a read only memory storing a basic program or data for operating the label management server 2.

The RAM 43 is a random access memory (read write memory (RWM)) for providing a working area for operating the CUP 41.

The communication control unit 44 is a functional part for connecting the label management server 2 to the Internet 3. The label management server 2 can communicate with the label issuing apparatuses 5 and the terminal 4 through the communication control unit 44.

The storage unit 45 is, for example, a random access memory (storage device) with a large capacity, which is configured by a hard disk or the like.

A program part 47 storing programs and a data part 48 storing data are provided in the storage unit 45.

The program unit 47 stores various programs such as an OS 51, a communication program 52, a label ID management program 53, and a Web program 54.

The OS 51 is a program for causing the CPU 41 to exert the basic function of operating the label management server 2 such as managing the input/output of files or controlling various functional parts.

The communication program 52 is a program for causing the CPU 41 to exert the function of controlling the communication control unit 44 and maintaining connection between the Internet 3 and the label management server 2.

The label ID management program 53 is a program for causing the CPU 41 to exert the function of issuing the label ID or managing the issued label ID.

Regarding the function of issuing the label ID, for example, the label ID is issued and transmitted to the label issuing apparatus 5a in response to a request to issue the label ID, and then stored in the data part 48; a label ID in the previous step is received and a label ID for the present step is issued and transmitted to the label issuing apparatuses 5b to 5e. The label ID issued this time is stored in the data part 48 in association with the label ID in the previous step.

The Web program 54 is a program for causing the CPU 41 to provide to the terminal 4 services such as inquiring about the history of the label ID or detailed information via the Internet 3.

With regard to the label ID history inquiry service, when the terminal 4 requests the CPU 41 to inquire about the history of the label ID, the CPU 41 searches the data part 48 for the history of the requested label ID and creates screen data for displaying history to transmit the data to the terminal 4.

Further, in the case where the terminal 4 requests the CPU 41 to inquire about the detailed information, the CPU 41 accesses each of the label issuing apparatuses 5 printing the label ID to acquire the objective detailed information and creates screen data for displaying detailed information using the obtained detailed information to transmit the data to the terminal 4.

In this case, the label management server 2 functions as a Web server.

The data part 48 stores various databases and various kinds of data such as the label ID management database 55, or a label issuing apparatus database 56.

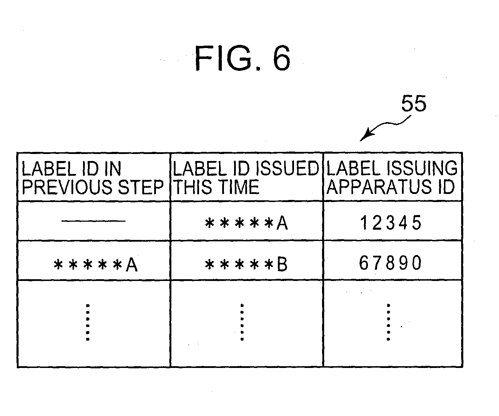

FIG. 6 is a conceptual diagram showing an example of a logical configuration of the label ID management database 55.

As shown in FIG. 6, in the label ID management database 55, the label ID issued in the previous step and the label ID issued this time are stored in association with each other. Also, the label issuing apparatus ID of the label issuing apparatus to which the label ID is transmitted is stored in association with the label ID issued this time.

The label management server 2 updates the label ID management database 55 each time the label ID is issued.

In this way, the label management server 2 is provided with identification information storage means for storing the label ID received from the label issuing apparatus and the label ID transmitted to the label issuing apparatus in association with each other.

The label management server 2 can obtain the history of the label IDs issued by tracing the association between the label ID in the previous step and the label ID issued this time in the label ID management database 55.

Also, it is possible to access the label issuing apparatus 5 specified based on the label issuing apparatus ID associated with the label ID issued this time to thereby request the detailed information related to the label ID of the label issuing apparatus 5.

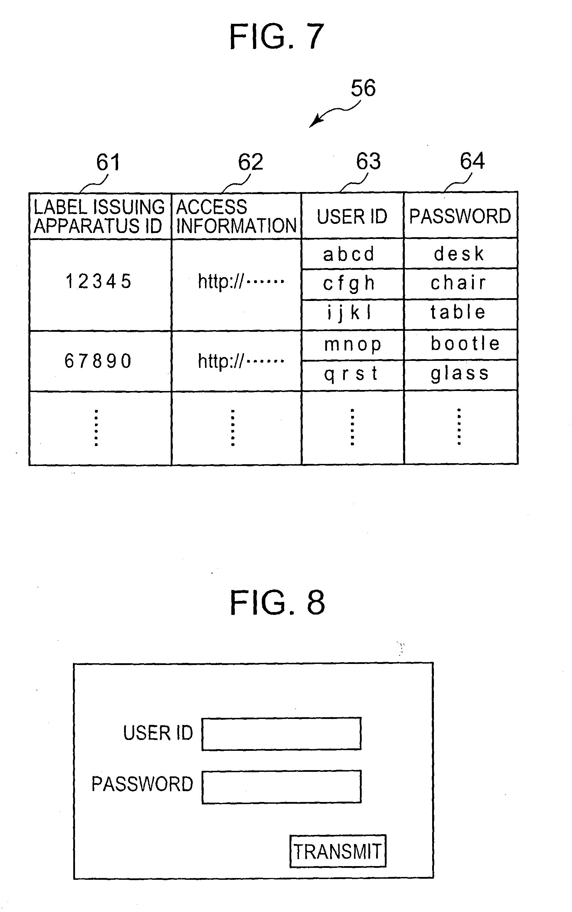

FIG. 7 is a conceptual diagram showing an example of a logical configuration of the label issuing apparatus database 56.

As shown in FIG. 7, the label issuing apparatus database 56 includes a label issuing apparatus ID 61, an access information 62, a user ID 63, a password 64, and other such items.

The label issuing apparatus ID 61 is given to each label issuing apparatus 5. When accessed by the label issuing apparatus 5, the label management server 2 receives the label issuing apparatus ID from the label issuing apparatus 5 and compares the received ID against the label issuing apparatus ID 61 to thereby specify which one of the label issuing apparatuses 5 accesses the server.

The access information 62 is used for accessing each label issuing apparatus 5 and, for example, includes uniform resource locators (URL).

The label management server 2 can access the desired label issuing apparatus 5 using the access information 62 when requesting the detailed information of the label issuing apparatus 5 via the Internet 3.

The user ID 63 and the password 64 are used for authenticating the user operating the label issuing apparatus 5 who tries to log in the label management server 2. One or more user IDs or passwords may be set for each label issuing apparatus 5.

The label management server 2 issues the label ID in the case where the user operating the label issuing apparatus 5 is authenticated.

Although not shown, the label issuing apparatus database 56 stores attached information necessary for issuing the label ID.

Examples of the attached information include information indicating whether the label issuing apparatus registered in the label issuing apparatus database 56 is provided for the first step (starting point) or for subsequent (downstream) steps.

The label management server 2 judges whether the label issuing apparatus 5 accessing the server is provided for the first step (starting point) or for subsequent (downstream) steps based on the attached information, and if the label issuing apparatus 5 is provided for the first step, issues the label ID in the present step in response to the request, and if the label issuing apparatus 5 is provided for the subsequent steps, issues the label ID in the present step upon receiving the label ID in the previous step.

FIG. 8 shows an example of a login screen displayed on the display unit 19 (see FIG. 3A) when the label issuing apparatus 5 accesses the label management server 2. The login screen is displayed using screen data transmitted from the label management server 2.

The user logs in, when printing the label with the label issuing apparatus 5, the label management server 2 with the login screen.

The login screen has, as shown in the figure, a user ID input box, a password input box, and a "transmit" button. The user inputs a user ID and a password in those boxes to select the "transmit" button (in the following description, selection of buttons is made by mouse-clicking). Then, the input user ID and password are transmitted to the label management server 2 and authenticated.

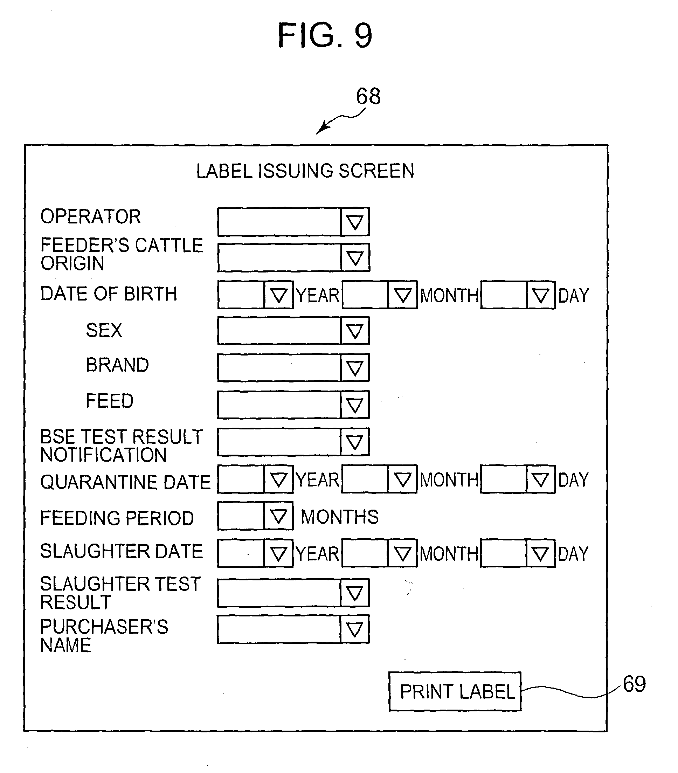

FIG. 9 shows an example of a label issuing screen 68 displayed on the display unit 19 with the label issuing apparatus 5a. The label issuing screen 68 is displayed using the screen data stored in the label issuing program 33 (see FIG. 3B) after logging in the label management server 2.

The item "operator" corresponds to a box in which the name of an operator who produces a beef product as a raw material from slaughtered cattle is input. The operator's name may be previously registered and selected from the drop-down menu. For the operator whose name has not been yet registered, his/her name is input with the keyboard. The following drop-down menu allows selection and input of previously registered input items as well as the input with the keyboard.

The items "feeder' s cattle origin", "date of birth", "sex", and "brand" correspond to boxes where the origin, date of birth, sex, and brand of the slaughtered cattle are input, respectively.

The item "feed" corresponds to a box where feeds that were for raising the slaughtered cattle are input.

The item "BSE test result notification" corresponds to a box where a test period and result of so-called BSE test on the cattle are input.

The item "quarantine date" corresponds to a box where the quarantine date for the slaughtered cattle is input.

The items "feeding period" and "slaughter date" correspond to boxes where the feeding period and slaughter date for the slaughtered cattle are input, respectively.

The item "purchaser" corresponds to a box where information about the purchaser of the cattle from fatting cattle producers.

A "print label" button 69 is a button for starting label printing. When the user clicks on the "print label" button 69, the label issuing apparatus 5a requests the label management server 2 to issue the label ID and prints the label by using the label ID transmitted in response to the request.

The label issuing apparatus 5a stores the data for each item input in the above boxes as the detailed information in the detailed information database 36 (see FIG. 3B).

Note that the label screen 68 is used to input corresponding data in the step from which a series of processings is started and thus has no box for inputting the label ID in the previous step.

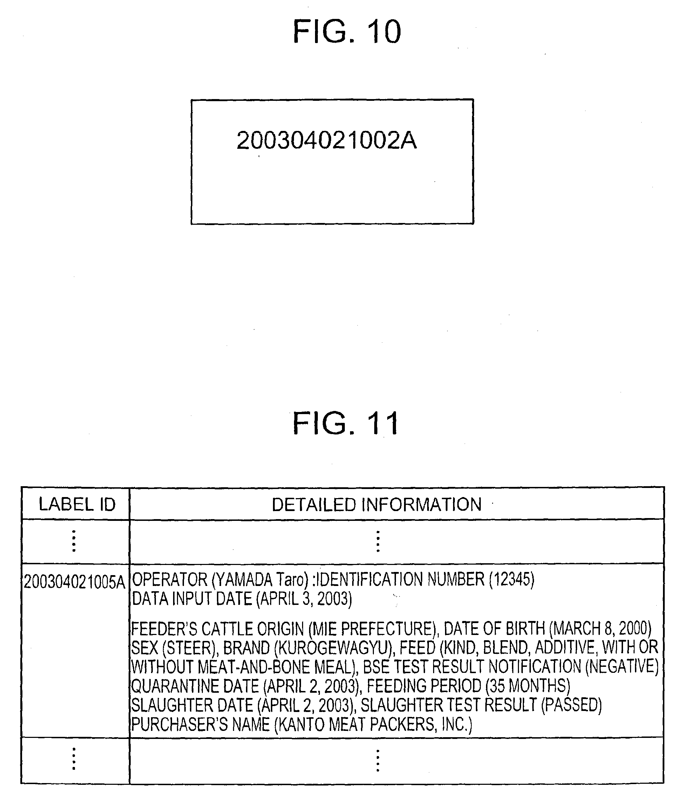

FIG. 10 shows an example of a label printed with the label issuing apparatus 5a. As shown in FIG. 10, the label ID issued from the label management server 2 is printed on the label.

In the example of FIG. 10, the label ID is only printed on the label, but the detailed information and other such information (e.g., holograph as anti-counterfeit means) may be printed together with the label ID.

In this embodiment, the time information indicative of the issuance date of the label ID is included in the label ID. The label ID including the time information makes it easy to grasp the chronological order related to the issuance of the label ID, for example, helps the consumer or the like to search the deceptive label.

In the case of using the label of FIG. 10, the time information of "2003/04/02 10:02" is embedded in the label ID.

The printed label is affixed on the produced beef product and the label-affixed product is shipped for the next step.

Note that a time adjusting center may be connected to the label management server 2 to set the time as appropriate.

FIG. 11 shows an example of a logical configuration of the detailed information database 36 in the label issuing apparatus 5a.

As shown in FIG. 11, the detailed information database 36 stores the input items that are input on the label issuing screen 68 as the detailed information in association with the printed label ID.

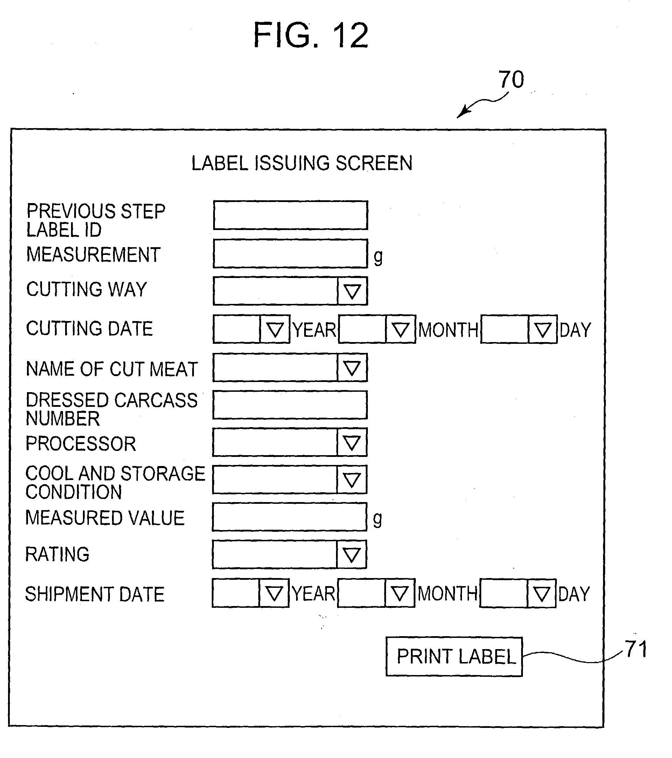

FIG. 12 shows an example of the label issuing screen 70 displayed on the display unit 19 in the label issuing apparatus 5b. The label issuing screen 70 is displayed using the screen data stored in the label issuing program 33 (see FIG. 33B) after logging in the label management server 2.

As shown in FIG. 12, the label issuing screen 70 is different from the label issuing screen 68 (see FIG. 9). The detailed information input according to each processing varies depending on the step. Therefore, the label issuing screen is set for each step. The label issuing screen is managed on the label issuing apparatus 5 side. This allows management of the screen independent of the label management server 2. Accordingly, it is possible to easily deal with the change in input item and enhance the flexibility of the label management system 1.

In the label issuing screen 70, the item "previous step label ID" corresponds to a box where the label ID printed on the label affixed on the beef product arrived from the previous step is input.

The item "measurement" corresponds to a box where the measured weight of processed beef is input.

The items "cutting way" and "cutting date" correspond to boxes where how the beef is cut upon the processing and the cut date are input.

The items "name of cut meat" and "dressed carcass number" correspond to boxes where the name of processed beef and the dressed carcass number are input, respectively.

The item "processor" corresponds to a box where the processor who processes the beef is input.

The item "cool and storage condition" corresponds to a box where the condition under which the beef product is stored is input.

The items "measured value" and "rating" correspond to boxes where the measured value and rating of the beef product are input, respectively.

The item "shipment date" corresponds to a box where the date of shipment for the next step is input.

A "print label" button 71 is a button for staring the label printing. When the "print label" button 71 is clicked on, the label issuing apparatus 5b transmits to the label management server 2 the label ID input in the item "previous step label ID" and the information such as the label issuing apparatus ID of the label issuing apparatus 5b and uses the label ID transmitted from the label management server 2 in return to thereby print the label. The input items input on the label issuing screen 70 are stored in the detailed information database 36 (see FIG. 3B) of the label issuing apparatus 5b.

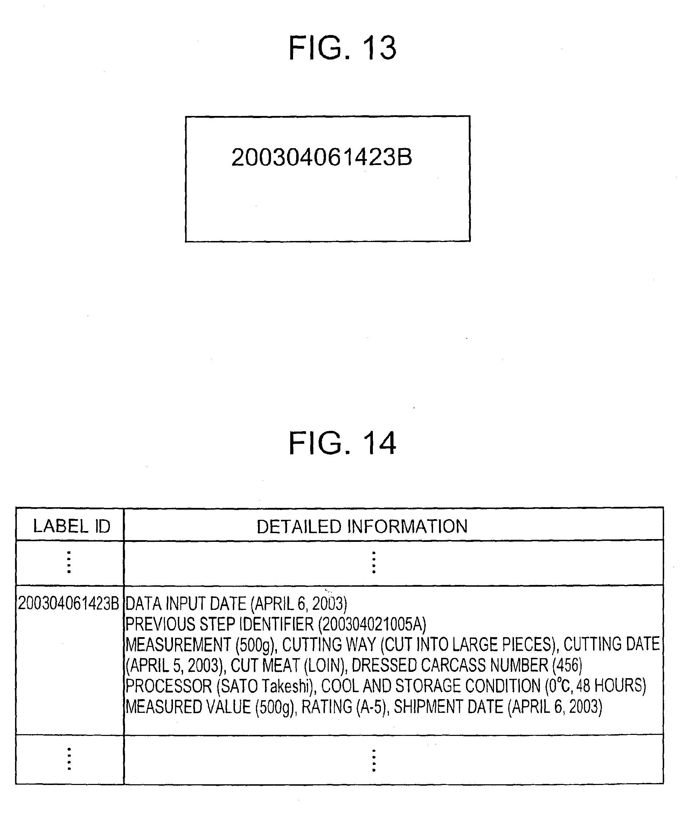

FIG. 13 shows an example of a label printed with the label issuing apparatus 5b.

The label ID issued from the label management server 2 is printed on the label surface. The time information of "2003/04/06 14:23" is embedded in the label ID.

The label is affixed on the product produced in the step concerned and shipped for the next step.

FIG. 14 shows an example of a logical configuration of the detailed information database 36 in the label issuing apparatus 5b.

As shown in FIG. 14, the detailed information database 36 stores the input items input on the label issuing screen 70 as the detailed information in association with the printed label ID.

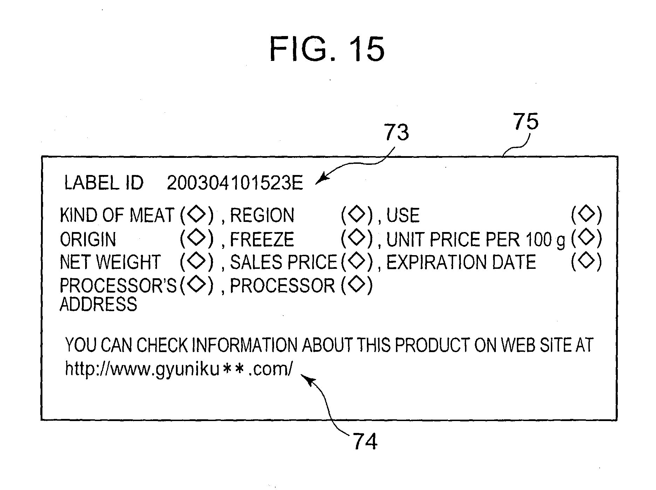

FIG. 15 shows an example of a label 75 printed by the label issuing apparatus 5e.

The label affixed to the retail product is provided to the consumer.

As shown in FIG. 15, a label ID 73 issued from the label management server 2 for the label 75 and mandatory information items are all printed on the label 75, which makes it possible to specify the beef product that the consumer inquires about.

Also the label 75 is printed with a URL 74 of the Web site to which inquiries about the product are directed. The Web site is provided by the label management server 2.

The consumer operating the terminal 4 can browse the information about the beef product from its production to the retail by accessing the URL 74.

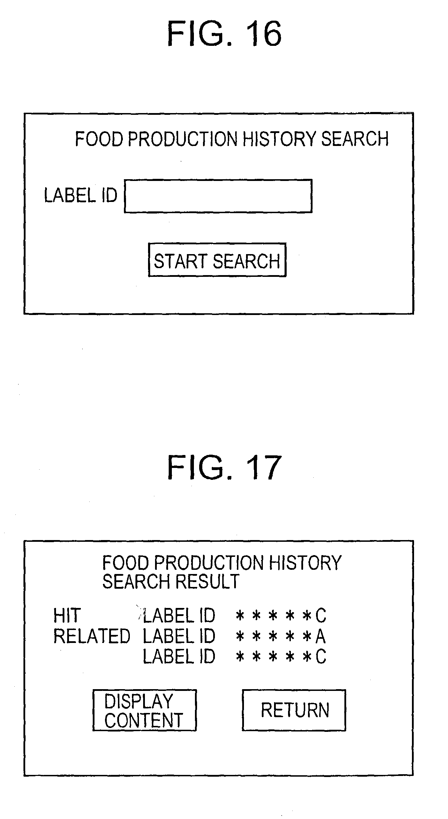

FIG. 16 shows an example of a search screen displayed on the terminal 4 when the consumer accesses the Web side set up by the label management server 2 from the terminal 4.

The screen is displayed using the screen data transmitted from the label management server 2, and the consumer and processor can browse the history and detailed information about the label ID related to the beef product with this screen.

The search screen has the label ID input box and the "start search" button.

When the label ID is input in the label ID input box and the "start search" button is clicked on, the input label ID is transmitted to the label management server 2 from the terminal 4 to start search for the label ID.

Note that the label management server 2 searches the label ID management database 55 for the received label ID and the label IDs related to the label ID concerned and transmits the label IDs together with the information on the association therebetween to the terminal 4.

In this way, the label management server 2 has inquiry accepting means for accepting an inquiry about the label ID from the terminal, identification information searching means for searching the requested label ID together with the label IDs related thereto, and search result information transmitting means for transmitting the searched label IDs together with information about the association therebetween.

Upon completion of the search, the search result screen of FIG. 17 is displayed on the terminal 4.

The search result screen displays a label ID hit by the search (the same as the input label ID) and a series of label IDs related to the label ID in history as related label IDs.

Clicking on a "display content" button opens the screen of the detailed information related to those label IDs and clicking on a "return" button returns the screen to the search screen.

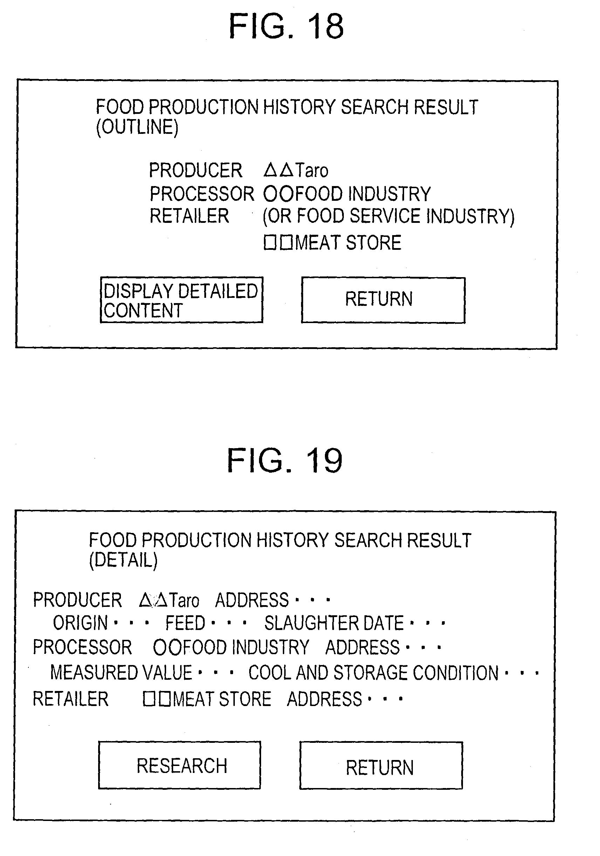

FIG. 18 shows an example of detailed information screen (outline). The screen is displayed on the terminal 4 in response to click of the "display content" button on the search result screen.

The screen data used for displaying the screen is created by using the detailed information acquired by the label management server 2 from each label issuing apparatus 5.

The screen displays outlined detailed information, i.e., the producer, processor, and retailer.

Clicking on a "display detailed information" button opens a screen of more detailed information and clicking on a "return" button returns the screen to the search result screen.

The processing is performed by using the detailed information transmitted from each label issuing apparatus 5 in response to transmission of the label ID to each label issuing apparatus 5 printing the label ID from the label management server 2.

In this case, each label issuing apparatus 5 constitutes an identification information storage device for managing the label ID and the detailed information in association with each other.

The label management server 2 has searched identification information transmitting means for transmitting the label ID acquired by searching the label ID management database 55 in advance to the label issuing apparatus, detailed information receivingmeans for receiving the detailed information transmitted from each label issuing apparatus 5, and detailed information transmitting means for transmitting the received detailed information to the terminal 4.

Meanwhile, the label issuing apparatus 5 has identification information inquiry accepting means for accepting an inquiry about the label ID from the label management server 2, detailed information searching means for searching the detailed information database 36 for the requested label ID, and detailed information transmitting means for transmitting the searched detailed information to the label management server 2.

In the above case, the label management server 2 requests an inquiry about the detailed information but the inquirer is not limited thereto. It is possible to accept inquiries from the terminal 4 or the label issuing apparatus 5.

FIG. 19 shows an example of a search result screen (detail) .

This screen is displayed by clicking on the "display detailed information" button on the detailed information screen (outline) .

This screen displays all detailed information stored in each label issuing apparatus 5.

Referencing these series of screens, the consumers can grasp how the purchased beef product is processed through which kind of processing before they purchase it. Also, the processor can ascertain the received beef quality.

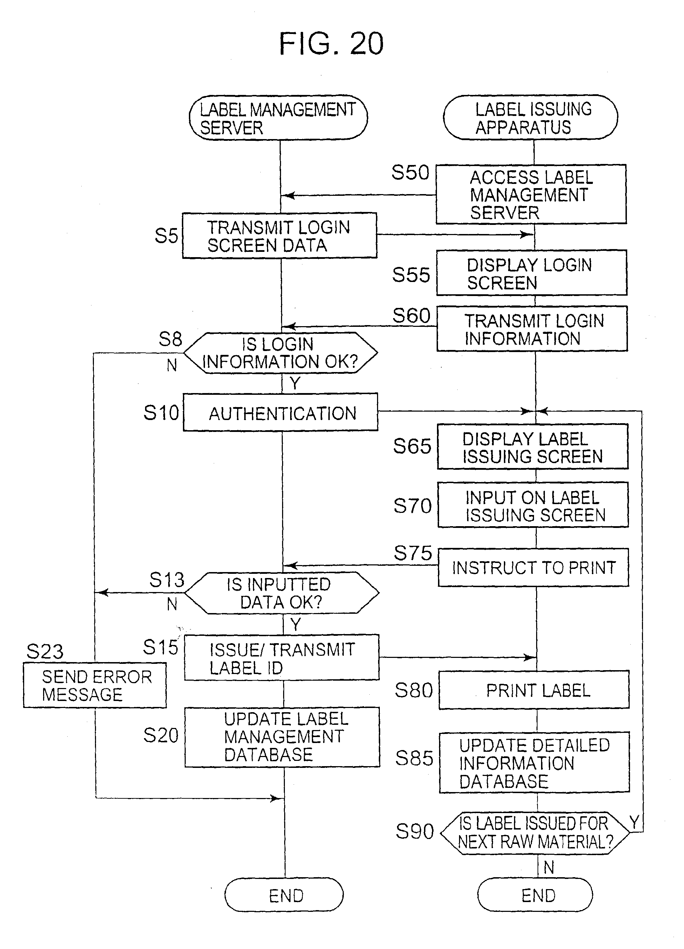

FIG. 20 is a flowchart illustrative of a procedure of printing the label ID with the label issuing apparatus (label issuing apparatus 5a) provided for the step from which a series of processings is started.

The following operations are performed by the CPU 41 according to the label ID management program in the label management server 2 and by the CPU 15 according to the label issuing program 33 in the label issuing apparatus 5a.

First, the label issuing apparatus 5a accesses the label management server 2 (step S50).

In response to the operation, the label management server 2 transmits the login screen data to the label issuing apparatus 5a (step S5).

The label issuing apparatus 5a receives the login screen data to display the login screen on the display unit 19 (step S55).

The operator inputs the user ID, password, etc., on the displayed login screen to transmit the login information to the label management server 2 (step S60) . The login information includes the user ID and password as well as the label issuing apparatus ID of the label issuing apparatus 5a, so that the label management server 2 can identify the label issuing apparatus.

The label management server 2 receives the login information from the label issuing apparatus 5a, checks the received information against information stored in the label issuing apparatus database 56, and judges the validity of the login information (step S8).

In the case of the valid login information (step S8 : Y), the label management server 2 authenticates the label issuing apparatus 5a and sends a signal to that effect to the label issuing apparatus 5a (step S10) .

In the case of the invalid login information (step S8: N), the label management server 2 sends an error message to the label issuing apparatus 5a (step S23) to end the processing. In the label issuing apparatus 5a, the error message is displayed and the label printing is not carried out.

In the case where the label issuing apparatus 5a is authenticated in step S10, the label issuing apparatus 5a receives this signal to confirm that the apparatus is authenticated and display the label issuing screen 68 (step S65).

The operator inputs necessary information on the label issuing screen 68 (step S70), and clicks on a "print" button 69 to issue a print instruction (step S75) . Then, the information input on the label issuing screen 68 is transmitted to the label management server 2 from the label issuing apparatus 5a.

The label management server 2 receives the input information from the label issuing apparatus 5a, and checks whether or not there is any erroneously input information (step S13). In this embodiment, the label management server 2 has a foolproof function and, for example, checks a human error such as input impossible numeric value.

If there is no error in input information (step S13: Y), the label management server 2 issues and transmits a label ID to the label issuing apparatus 5a (step S15). Then, the issued label ID is stored in the label ID management database 55 to update the database (step S20).

The label issuing apparatus 5a receives the label ID from the label management server 2 and uses the label ID to print the label (step S80).

If there is any error in input information received from the label issuing apparatus 5a (step S13 : N), the label management server 2 sends an error message to the label issuing apparatus 5a (step S23) to end the processing.

Next, the label issuing apparatus 5a stores the label ID and the detailed information input on the label issuing screen in the detailed information database 36 in association with each other to update the database (step S85).

If the label issuing apparatus 5 continues to issue the next label (step S90: Y), the process returns to step S65; if not issuing the label anymore (step S90: N), the operator logs out to end the processing.

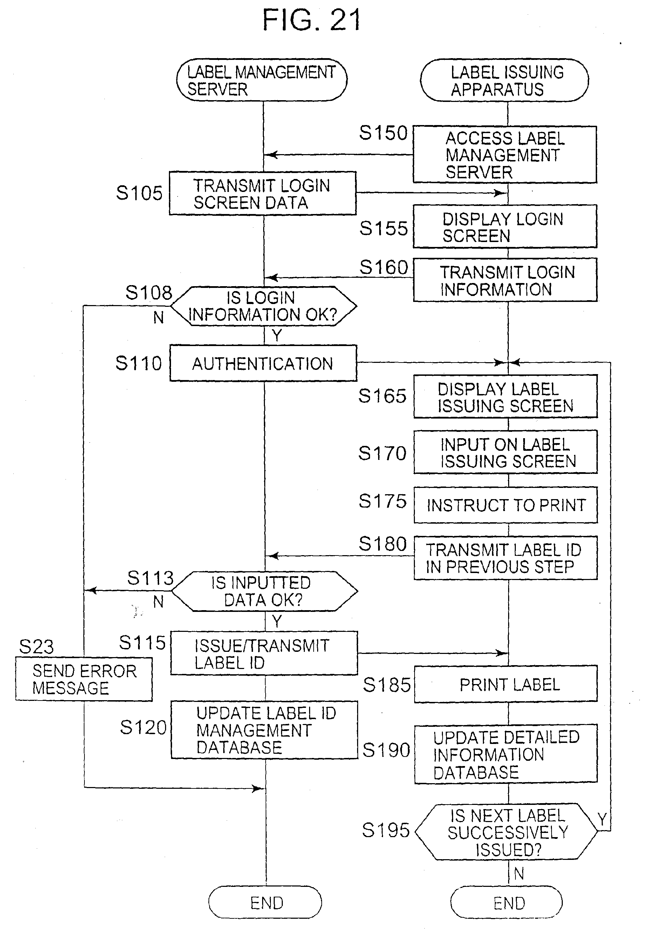

FIG. 21 is a flowchart illustrative of a procedure of printing the label ID with the label issuing apparatuses (label issuing apparatuses 5b to 5e) provided for each step subsequent to the first step (starting point). Here, an explanation will be given using the label issuing apparatus 5b as an example.

First, the operator of the label issuing apparatus 5b accesses the label management server 2 (step S150) . A subsequent series of steps up to step S110 are the same as steps up to step S10 of FIG. 20 and thus a description thereof is omitted here.

When the label management server 2 authenticates the label issuing apparatus 5b, the label issuing apparatus 5b displays the label issuing screen 70 (step S165).

The operator inputs necessary information on the label issuing screen 70. At this time, the label ID printed on the label affixed on the beef product arrived from the producer is input (step S170) .

The operator next clicks on a "print label" button 71 to issue a print instruction (step S175).

The label issuing apparatus 5b accordingly transmits the information (including the label ID) input on the label issuing screen 70 to the label management server 2 and requests the issuance of the label ID from the label management server 2 (step S180).

The label management server 2 receives the input information from the label issuing apparatus 5b and checks the input information by means of the foolproof function (step S113).

This check is aimed to not only check impossible numerical value, for example, but also check the request for issuance of the unauthorized label ID such as checking whether or not a received label ID was issued in the past, checking the number of times the label ID was transmitted in the past, and checking whether or not the number of times falls within an appropriate range.

When the check result reveals that the input information is valid (step S113: Y), the label management server 2 issues and transmits the label ID to the label issuing apparatus 5b (step S115) .

The label ID received from the label issuing apparatus 5b and the label ID issued this time are stored in the label ID management database 55 in association with each other to update the database (step S120).

When the check result reveals that the input information received from the label issuing apparatus 5b is invalid (step S113 : N), the label management server 2 sends an error message to the label issuing apparatus 5b to end the processing.

In the case of the valid input information, the label issuing apparatus 5b receives the label ID from the label management server 2 to print the label ID on the label (step S185) . The printed label is affixed on the processed product.

Next, the label issuing apparatus 5b stores information input on the label issuing screen 70 as detailed information in association with the printed label ID in the detailed information database 36 to update the database (step S190).

If the label issuing apparatus 5b continues to issue the next label (step S195 : Y), the process returns to step S165; if the printing operation is ended (step S195: N), the operator logs out to end the processing.

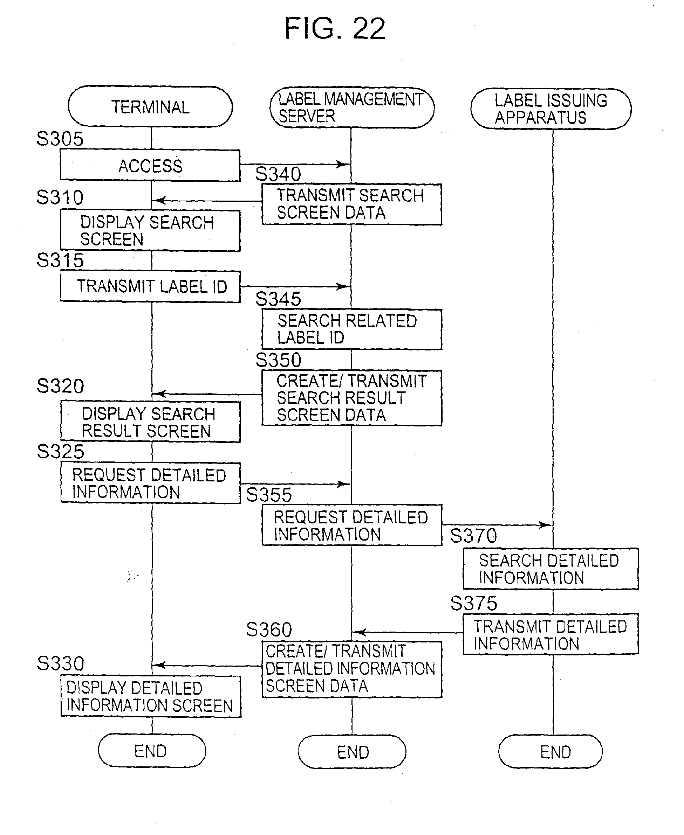

FIG. 22 is a flowchart illustrative of a procedure of searching a food production history.

First, the user (consumer, processor, etc.) operating the terminal 4 accesses the label management server 2 (step S305).

The label management server 2 transmits in return search screen data to the terminal 4 (step S340).

The terminal 4 receives the search screen data from the label management server 2 to display the search screen on the display device (step S310).

The user inputs the label ID displayed on the search screen to transmit the data to the label management server 2 (step S315) .

The label management server 2 receives the label ID and searches the label ID management database 55 for the label ID concerned and label IDs related to the label ID concerned in history (step S345) .

Next, the label management server 2 uses the searched label ID to create and transmit search result screen data to the terminal 4 (step S350).

The terminal 4 receives the search result screen data from the label management server 2 to display the search result screen on the display device (step S320).

If the user makes a request to browse the detailed information (step S325), the label management server 2 transmits the searched label ID to the label issuing apparatus 5 that prints the label ID concerned and requests the apparatus to transmit the detailed information related to the label ID concerned (step S355).

Each label issuing apparatus 5 searches, in response to the request, the detailed information database 36 for the detailed information related to the label ID received from the label management server 2 (step S370), and transmits the search result to the label management server 2 (step S375).

The label management server 2 receives the detailed information from each label issuing apparatus 5, and creates and transmits detailed information screen data to the terminal 4 (step 5360). Here, when the user requests the outlined information and the detailed information, the "outlined" detailed information screen data and the "detailed" detailed information screen data are created, respectively.

The terminal 4 receives the detailed information screen data from the label management server 2 and uses the data to display a detailed information screen (step S330).

In this embodiment as described above, the following effects can be produced.
(1) The label IDs are issued in association with one another in a series of steps, whereby the label is imparted with traceability (tracing function) for a product history.
(2) When the new label is issued, the label is issued in association with the label ID in the previous step, whereby it is possible to prevent the label with incorrect indication or deceptive label from being issued. Therefore, high accuracy in label indication is ensured.
(3) The correct content indication is obliged, whereby it is possible to avoid such a situation that top-brand beef is blended with no-brand beef to increase the total weight or the beef as is top-brand one but is stored in unsuitable condition and begins to go bad is put on the market. As a result, the reliability of the brands can be maintained. The same holds for other fresh foods than beef.
(4) The consumer, processor, retailer, etc. , can easily browse the product history via the Internet 3.
(5) The detailed information is managed in each label issuing apparatus 5, whereby a load on the label management server 2 is lessened.
(6) The use condition of each label issuing apparatus 5 can be grasped by the label management server 2, whereby a toll can be collected according to frequency of use of each label issuing apparatus 5 to achieve running cost reduction.
(7) The use condition of the label issuing apparatus 5 is monitored to perform maintenance and replenish expendables as appropriate and ensure the usability for the user. Also, it is possible to prevent any system breakdown and deteriorated print quality due to pirated expendables, allowing the user to feel secure about the system.

### (Modified Example 1)

In the above embodiment, the detailed information is managed in each label issuing apparatus 5 but may be managed in the label management server 2 as well.

In this case, when requesting the label ID from the label management server 2, the label issuing apparatus 5 transmits the detailed information to the label management server 2 and the label management server 2 receives the detailed information to issue the label ID. The label ID is stored in association with the detailed information.

When the label management server 2 manages the detailed information, the input detailed information is hardly tampered.

### (Modified Example 2)

In the above embodiment, when the user operating the terminal 4 requests the detailed information on the search result screen, the label management server 2 collects the detailed information from each label issuing apparatus 5. However, this may be modified such that the user selects the label ID and then the detailed information is transmitted from the corresponding label issuing apparatus 5 to the terminal 4.

In such a case, URL of the corresponding label issuing apparatus 5 is previously embedded in the label ID displayed on the search result screen as a link destination. Then, the user selects the label ID to jump to the Web site set up by the label issuing apparatus 5 and the label ID is transmitted from the terminal 4 to the label issuing apparatus 5 as a parameter.

In this case, the label issuing apparatus 5 receives the label ID from the terminal 4 to search and transmit the detailed information to the terminal 4.

### (Modified Example 3)

In order to prevent tampering of the detailed information stored in each label issuing apparatus 5, the detailed information may be hashed upon issuing the label ID and a digest message may be stored by the label management server 2 in association with the label ID.

The term "hashed" means that a string (digest message) is created from an electronic document using a function called a hash function.

The same digest message can be obtained from the same electronic document. If even a part of the electronic document is modified, the digest message of this document differs from the one before modification.

Therefore, the digest message of the detailed information stored in the label issuing apparatus 5 and the digest message (hash value) stored in the label management server 2 are compared with each other, so that whether or not the detailed information stored in the label issuing apparatus 5 is tampered can be checked. Also, the digest message requires only small data volume, and thus places a small load on the label management server 2 when in storage.

In this way, the digest message constitutes modification detection information whose value is changed when the detailed information is modified, and also a module for hashing the detailed information constitutes detection information creation means.

Using the hash function facilitates check as to whether or not the displayed detailed information is tampered/falsified, offering a deterrent effect against falsification of the detailed information. Therefore, the safety of the beef is ensured and the user and consumer can feel secure about the indication.

Also, the detailed information is input with the label issuing apparatus 5, after which the detailed information may be locked not to allow the change and additional input.

### (Modified Example 4)

Amonitoring server for monitoring each label issuing apparatus 5 is set on the Internet 3 to monitor whether or not there is any corruption.

The server checks whether or not the total weight of the produced beef product in the downstream step is within the total weight of the one produced in the upstream step or monitors where or not a specific label ID is abused as the label ID in the previous step.

### (Modified Example 5)

In this embodiment, the label IDs are printed on the label so as to prevent duplication of the label ID but may be printed while allowing the duplication to some degree.

For example, it is assumed that three beef products are produced under the same condition from beef with a label ID-A and the same label printed with a label ID-B is affixed to each beef product.

Such a label issuing method is applicable within a range as gives no influence on the product quality preservation. Also, this method eliminates the need to issue the label IDs for the individual labels, so that the load on the label management server 2 and the label issuing apparatuses 5 can be reduced.

As mentioned above, in the case of printing the label ID in a duplicated manner, the number of duplications is transmitted to the label management server 2 to allow the label management server 2 to grasp how many label IDs are used.

Also, it is possible to combine the method of issuing the individual label IDs to all the products produced in the same step with the method of issuing the same label ID thereto.

For example, the individual label IDs may be issued to all the products in middle steps and the same label ID may be issued at the stage of retail product.

The more downstream steps involve a larger number of products, so that the individual label IDs are issued in the upstream steps and the same label ID is issued in the downstream steps. With such a structure, the load on the label management server 2 is small and the consumer can acquire necessary information.

### (Modified Example 6)

In the above embodiment, the history of the label ID is managed in the label management server 2, but may be managed in each label issuing apparatus 5 in a distributed manner.

In this case, each label issuing apparatus 5 stores the label ID printed in the previous step in association with the label ID printed in the present step. The label ID printed in the present step and the label ID in the previous step associated with the label ID concerned are searched in each label issuing apparatus 5, thereby offering the history of a series of label IDs.

For example, it is assumed that the label issuing apparatus 5a prints a label A, the label issuing apparatus 5b prints a label B in association with the label A, and the label issuing apparatus 5c prints a label C in association with the label B. The label issuing apparatuses 5a, 5b, and 5c store the label IDs in such a way that associates the label ID in the previous step with the label ID in the present step, like "A", "A-B", and "B-C", for example.

With the label issuing apparatuses 5, collecting those pieces of information from the label issuing apparatuses 5a, 5b, and 5c and tracing the association therebetween provide the history of "A B C" .

In this modified example, the label management server 2 having a function of issuing the label ID and a function of searching the label ID in each label issuing apparatus 5 can obtain the history of the label IDs to considerably diminish the load on the label management server 2.

Further, if the hash value of the detailed information mentioned in Modified Example 3 is stored in association with the issued label ID, the tampered detailed information in the label issuing apparatuses 5 can be detected as well.

### (Modified Example 7)

In general, the label issuing apparatus 5 can print the label ID by use of physically attachable label media (label media such as paper or plastic (synthetic resin)). This involves the possibility that counterfeit or tampering occurs.

Also, even if an attempt is made tovisuallyprevent counterfeit or tampering such as printing a certification mark on the label, such an attempt depends on the visual judgement by the operator, so that the judgement criteria are not clear.

As regards the traceability for tracing the history of the product, the trace target is the history between industries and organizations and over plural steps and linkage is necessary between different information systems. Thus, a mechanism capable of surely judging the label for authenticity is necessary.

To that end, in this modified example, the label issuing apparatuses 5 are imparted with a function of judging a label for authenticity to prevent the counterfeit or tampering of the label.

A principle for the authenticity judgement is that ink or authenticity identification substance is contained in the label media or ink, or a liquid containing the authenticity identification substance is applied onto the label media surface, and a detection device detects it for the authenticity judgement.

In this way, the label or label issuing apparatus has an authenticity judgement element (authenticity identification substance) or detection function, making it possible to avoid the counterfeit and tampering. In this system, such a structure contributes to an improvement in reliability of the information system and allows the user to feel secure about the system.

Examples of the authenticity identification substance include a magnetic medium, magnetic resonance medium, and phosphor.

The magnetic medium may respond to specific electromagnetic phenomenon, and thus is provided inside or on the label media, or printed on the label media with recording means as magnetic ink combined with the recording ink.

The magnetic medium enables judgement as to the authenticity of the target label media in combination with anMR detection element.

The magnetic resonance medium responds to and resonates with an electromagnetic wave with a specific frequency, and thus is provided inside or on the label media, or printed on the label media with recording means as magnetic resonance ink combined with the recording ink similar to the magnetic ink.

The magnetic resonator enables judgement as to the authenticity of the target label media in combination with a specific-frequency (RF) detection element.

The phosphor responds to light with a specific wavelength and thus is provided inside or on the label media, or printed on the label media with recording means as phosphor ink combined with the recording ink similar to the magnetic ink.

The phosphor enables judgement as to the authenticity of the target label media by irradiating the phosphor with the light having a predetermined wavelength and detecting the light emission.

Also, when the individual identification is further carried out at the time of authenticity identification, a DNA identifier is contained in those authenticity identification substances to enable individual identification.

The DNA identifier is such that a deoxyribonucleic acid (DNA) having a specific base sequence pattern is used as an identifier. DNA ink containing the DNA identifier is put into practical use.

For the DNA identifier, it is provided inside the label media in combination with the above authenticityidentification substances, or used as recording ink in combination with the above authenticity identification substances and printed on the label media with recording means as the DNA ink.

The individual identification is realized by identifying the base sequence pattern and carrying out detailed analysis with DNA analyzing device or equipment.

With the label issuing apparatuses 5 in this modified example, the control is made so as to judge the label in the previous step for authenticity and to let the label produced by the label issuing apparatuses 5 contain the authenticity identification substance.

The above-mentioned points are described below.

### (1) Authenticity judgement for label in previous (last) step

Each label issuing apparatus 5 has a detection device for detecting whether or not the detection target contains the authenticity identification substance.

The detection mechanism includes a detection terminal (sensor) detachably attached to the label issuing apparatus 5, such as a pen-shaped detector. The operator brings the detection terminal closer to the label in the previous step to judge the label for authenticity.

In this way, the label issuing apparatus 5 can detect whether ornot the label affixed in the previous step contains the authenticity identification substance by using the detection mechanism, by which the operator can judge the label for authenticity.

### (2) Authenticity judgement for label to be printed

When a special media added with the authenticity identification substance beforehand is used to issue a label, the detection terminal is installed inside the label issuing apparatus 5 to detect the authenticity identification substance contained in the label media.

Then, a function of controlling a print mechanism not to print any label is provided in the case where the label media is not a specified media. In this manner, the use of the pirated label media can be prevented.

### (3) Authenticity judgement for ink

For example, in an inkjet print system, ink having authenticity identification substances dispersed therein may be used for printing on the label. In this case, the detection terminal for detecting whether or not the ink contains the authenticity identification substance is provided to judge whether or not the ink to be used for printing is authenticated.

A function of controlling a print mechanism not to print any label is provided in the case where the ink is judged unauthenticated.

### (4) Authenticity judgement for coating

When the authenticity identification substance is applied and dispersed to the label media surface in the course of the label printing, the detection terminal is provided for detecting whether or not the coating contains the authenticity identification substance to judge whether or not the coating is authenticated before coating.

As a coating method, for example, the authenticity identification substance is contained in a liquid and the liquid is discharged onto the label media surface, or stamped.

A function of controlling a print mechanism not to print any label is provided in the case where the coating is judged unauthenticated.

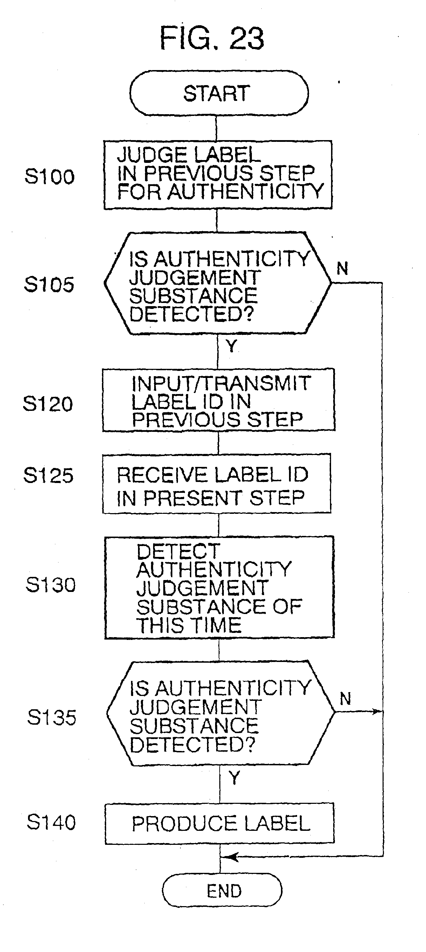

FIG. 23 is a flowchart illustrative of a procedure of producing a label in this modified example.

First, the operator sets the detection terminal to the label affixed in the previous step. The label issuing apparatus 5 judges the label for authenticity based on a signal from the detection terminal (step S100) . The label issuing apparatus 5 has authenticity judgement means this way.

In the case of the unauthenticated label, the label issuing apparatus 5 ends the label producing processing or may send to the operator an alarm notification to that effect.

In the case of the authenticated label (step S105: Y), the label issuing apparatus 5 displays the label issuing screen 70 shown in FIG. 12, and allows input of the label ID in the previous step or other detailed information. The label issuing apparatus 5 transmits the label ID etc. to the label management server 2 in response to click of the "print label" button 71 (step S120).

As discussed above, the label issuing apparatus 5 has identification information transmitting means for transmitting the identification information (label ID) printed on the label in the previous step to a product history management device (label management server 2).

Although not shown, the label management server 2 receives the label ID in the previous step from the label issuing apparatus 5 and then issues and transmits the label ID in the present step in association with the received ID to the label issuing apparatus 5.

The label issuing apparatus 5 receives the label ID in the present step from the label management server 2 (step S125).

The label issuing apparatus 5 thus has identification information receiving means for receiving the identification information from the label management server 2.

Next, the label issuing apparatus 5 detects the authenticity identification substance contained in a label material for issuing the label of this time and confirms that the label material is authenticated (step S130).

This processing is performed such that, for example, when the label media containing the authenticity identification substance is used for producing the label, the authenticity identification substance contained in the label media is detected.

Also, when the ink used for printing the label contains the authenticity identification substance, the authenticity identification substance contained therein is detected.

Further, when the liquid containing the authenticity identification substance is applied onto the label,surface, the authenticity identification substance contained in the liquid is detected.

If the authenticity identification substance to be contained in the label material is not detected (step S135: N), the label issuing apparatus 5 ends the label producing processing.

In the case where the authenticity identification substance is detected from the label material (step S135 : Y) , the label issuing apparatus 5 prints the label ID of this time on the label media to produce the label (step S140).

In this way, the label issuing apparatus 5 has label producing means for producing a label including the label ID (identification information) in the present step and the authenticity identification substance.

Note that, the above-mentioned procedure is given as an example, and various modifications are allowed.

For example, in the aforementioned procedure, when the label is judged authenticated (step S105: Y) as a result of judging the label in the previous step for authenticity, the label ID in the present step is requested of the label management server 2 (step S120) . In contrast, the label ID in the present step is requested of the label management server 2 and then the label ID in the present step is received from the label management server 2, after which the label in the previous step may be judged for authenticity.

Also, in the above-mentionedprocedure, upon printing the label, the authentication identification substance contained in the label material is detected, but the label may be judged for authenticity upon setting the label material.

For example, when the label media contains the authentication identification substance, the authentication identification substance is detected at the time when the label media is set in the label issuing apparatus 5; if the authentication identification substance is not detected from the label media, a label printing operation is suspended. In the case of using the ink or coating liquid containing the authentication identification substance, similarly, it is possible to detect the authentication identification substance at the time when the ink or coating liquid is set in the label issuing apparatus 5.

Further, in the above procedure, after the authentication identification substance is detected (step S135), the label is produced. However, it is possible to detect the authentication identification substance contained in the produced label after the label production.

In this case, the detection terminal is provided near the label extraction port and the authentication identification substance contained in the produced label is thereby detected. If the authentication identification substance is not detected, for example, alarm notificationto that effect is issued to the operator (notifying means).

A description has been made so far of the case where the label media, ink, and coating contain the authentication identification substance. However, it is possible that the label media contains the authentication identification substance but the ink does not contain the authentication identification substance. Alternatively, the label media and ink do not contain the authentication identification substance but the coating containing the authentication identification substance is used. In this way, various combinations are allowed.

Any of the combinations can be used insofar as the printed label contains the authentication identification substance.

Also, the authentication identification substance is provided on or inside the label media and in addition, judgement elements involving visual or tactual judgement such as fluorescent ink, liquid crystal ink, watermark, and hologram may be used in combination. In this way, the element allowing the sensual judgement of the operator is combined, so that the operator intuitively perceives whether or not the label is authenticated.

According to this modified example as described above, the following effects are produced:
(1) The label issuing apparatus can be used to detect the authenticity identification substance provided on or inside the label media.
(2) Detection of the authenticity identification substance enables the judgement of the label affixed in the previous step for authenticity and raises the security level.
(3) If the label to be printed contains no authenticity identification substance, the printing can be suspended, whereby the production of the deceptive label can be prevented.
(4) The detection mechanism is used for the authenticity judgement without relying on the operator's senses, whereby the judgement can be performed without fail.
(5) The use of the designated materials for the label media or ink can be obliged, thereby offering the optimum print quality. Also, the use of the designated label media or ink improves the durability of the label issuing apparatus.

As discussed above, in this embodiment and each modified example, the label IDs are issued for the beef product by way of example, but the application range of the present invention is not limited thereto. The present invention is applicable to the production/distribution of meat products in general, fishery products, and farm products, the production/distribution of pharmaceuticals, and other industrial products.

Further, the label management system according to this embodiment and each modified example can be achieved by the following structures.

The present invention provides a product history management apparatus for issuing identification information printed on a label affixed on each of products produced in each of steps f rom raw material production to final product production to label issuing apparatuses provided for each of the steps, including: identification information receiving means for receiving from the label issuing apparatus provided for one of the steps identification information printed on a label affixed in a step immediately preceding the one step; identification information transmitting means for issuing new identification information relative to the received identification information and transmitting to the label issuing apparatus provided for the one step the issued identification information; and identification information storage means for storing the received identification information in the step immediately preceding the one step in association with the new identification information issued and transmitted (eighth structure).

Here, the product history management apparatus according to the eighth structure of the present invention may further include: identification information inquiry accepting means for accepting an inquiry about identification information from a terminal; identification information searching means for searching the identification information storage means for the inquired identification information and identification information associated with the inquired identification information; and searched identification information transmitting means for transmitting the searched identification information together with associations to the terminal (tenth structure).

Here, the product history management apparatus according to the tenth structure of the present invention may further include: searched identification information transmitting means for transmitting the searched identification information with the identification information searching means to a detailed information storage device storing the identification information and detailed information related to a product affixed with a label on which the identification information is printed in association with each other; detailed information receiving means for receiving detailed information associated with the transmitted identification information from the detailed information storage device; and detailed information transmitting means for transmitting to the terminal the received detailed information (eleventh structure).

Further, in the product history management apparatus according to the eleventh structure of the present invention, the detailed information storage device has detection information creating means for creating modification detection information whose value varies upon modification of the detailed information and the product history management apparatus may store identification information stored in the detailed information storage device in association with modification detection information created by the detection information creating means with respect to detailed information associated with the identification information (twelfth structure) .

Further, the present invention provides a label issuing apparatus, which is the label issuing apparatus provided for the one step out of the label issuing apparatuses according to the eighth structure of the present invention. The label issuing apparatus includes: identification information transmitting means for transmitting identification information printed on the label affixed in the step immediately preceding the one step to the product history management apparatus; identification information receiving means for receiving from the product history management apparatus identification information issued relative to the transmitted identification information; and printing means for printing the received identification information (twelfth structure).

Here, the label issuing apparatus according to the twelfth structure of the present invention may further include: detailed information inputting means for inputting detailed information related to a product to which the printed label is affixed; and detailed information storage means for storing the input detailed information in association with the identification information printed on the printed label (thirteenth structure).

Also, the label issuing apparatus according to the thirteenth structure of the present invention may further include: identification information inquiry accepting means for accepting an inquiry about identification information from the label issuing apparatus; detailed information searching means for searching the detailed information storage means for detailed information associated with the inquired identification information; and detailed information transmitting means for transmitting the searched identification information to the label issuing apparatus.

Also, in order to achieve the aforementioned object, the present invention provides a product history management method for issuing identification information printed on a label affixed on a product produced in each of steps from raw material production to final product production to label issuing apparatuses provided for each of the steps, including: an identification information receiving step for receiving, by using a computer provided with identification information receiving means, identification information transmitting means, and identification information storage means, identification information printed on a label affixed in a step immediately preceding one of the steps from the label issuing apparatus provided for the one step with the identification information receiving means; identification information transmitting step for issuing new identification information relative to the received identification information and transmitting the issued identification information to the label issuing apparatus provided for the one step with the identification information transmitting means; and identification information storage step for storing the received, identification information in the step immediately preceding the one step in association with the new identification information issued and transmitted with the identification information storage means.

Also, in order to achieve the above-mentioned object, the present invention provides a product history management program for causing a computer to execute, the computer issuing identification information printed on a label affixed on a product produced in each of steps from raw material production to final product production to label issuing apparatuses provided for each of the steps: an identification information receiving function of receiving from the label issuing apparatus provided for one of the steps, identification information printed on a label affixed in a step immediately preceding the one step; an identification information transmitting function of issuing new identification information relative to the received identification information and transmitting the issued identification information to the label issuing apparatus provided for the one step; and an identification information storage function of storing the received identification information in the step immediately preceding the one step in association with the new identification information issued and transmitted.

Further, in order to achieve the above-mentioned object, the present invention provides a label issuing method executed in a label issuing apparatus, which is the label issuing apparatus provided for the one step out of the label issuing apparatuses according to the eighth structure of the present invention and includes a computer having identification information transmitting means, identification information receiving means, and printing means, including: an identification information transmitting step for transmitting identification information printed on the label affixed in the step immediately preceding the one step to the product history management apparatus with the identification information transmitting means; an identification information receiving step for receiving from the product history management apparatus identification information issued relative to the transmitted identification information with the identification information receiving means; and a printing step for printing the received identification information with the printing means.

Also, in order to achieve the above-mentioned object, the present invention provides a label issuing program for causing the label issuing apparatus provided for the one step out of the label issuing apparatuses according to the eighth structure of the present invention and including a computer to issue a label, the program causing the computer to execute: an identification information transmitting function of transmitting to the product history management apparatus identification information printed on a label affixed in a step immediately preceding the one step; an identification information receiving function of receiving from the product history management apparatus, identification information issued relative to the transmitted identification information; and a printing function of printing the received identification information.

Also, the present invention provides a product history management system, including: a product history management apparatus; label issuing apparatuses; and a history search apparatus,
the product history management apparatus issuing identification information printed on a label affixed on a product produced in each of steps from raw material production to final product production to the label issuing apparatuses provided for each of the steps and including:
receiving means for receiving a request for issuance of identification information from the label issuing apparatus provided for one of the steps; and
transmitting means for transmitting identification information in response to the received request of issuance,
the label issuing apparatuses each including:
identification information acquiring means for acquiring identification information printed on a label affixed in a step immediately preceding the one step;
sending means for sending a request for issuance of identification information to the product history management apparatus;
receiving means for receiving identification information issued in response to the sent request for issuance from the product history management apparatus;
printing means for printing the received identification information; and
storage means for storing the identification information acquired by the identification information acquiring means in association with the identification information received by the receiving means, and
the history search apparatus including:
inquiry accepting means for accepting an inquiry about identification information;
identification information searching means for searching the storage means of the label issuing apparatuses provided in each of the steps for the inquired identification information and identification information associated with the inquired identification information; and
searched identification information transmitting means for transmitting the searched identification information together with associations.

## Claims

1. A label issuing apparatus used in a product history management system that includes: a plurality of label issuing apparatuses provided for each of steps from raw material production to final product production; and a product history management apparatus for issuing to the plurality of label issuing apparatuses identification information printed on a label affixed on a product produced in each of the steps, comprising:
identification information transmitting means for obtaining identification information printed on a label affixed in a last step and transmitting the obtained identification information to the product history management apparatus;
identification information receiving means for receiving identification information issued for the step by the product history management apparatus in association with the transmitted identification information;
authenticity judgement means for judging the label affixed in the last step for authenticity by detecting an authenticity identification substance contained in the label; and
label producing means for producing, when the label affixed in the last step is judged authenticated by the authenticity judgement means, a label including the identification information of the step and the authenticity identification substance.

2. A label issuing apparatus according to claim 1, wherein the label producing means produces a label using a label medium containing the authenticity identification substance.

3. A label issuing apparatus according to claim 1 or 2, wherein the label producing means makes the authenticity identification substance contained in a label by dispersing the authenticity identification substance onto a surface of the label.

4. A label issuing apparatus according to any one of claims 1 to 3, wherein the authenticity judgement means judges, before the label is produced, whether or not a label material contains the authenticity identification substance, and the label producing means produces, when the label material is judged authenticated, the label.

5. A label issuing apparatus according to any one of claims 1 to 4, wherein the authenticity judgement means judges the label produced by the label producing means for authenticity and has notifying means for notifying a result of the authenticity judgement of the produced label.

6. A label issuing apparatus according to any one of claims 1 to 5, further comprising:
detailed information inputting means for inputting detailed information related to a product to which a label issued by the label producing means is affixed; and
detailed information storage means for storing the input detailed information in association with the identification information printed on the issued label.

7. A label issuing apparatus according to claim 6, further comprising:
identification information inquiry accepting means for accepting an inquiry about identification information;
detailed information searching means for searching the detailed information storage means for detailed information associated with the inquired identification information; and
detailed information transmitting means for transmitting the searched detailed information to an inquirer.
